# EUROPEAN PATENT APPLICATION

(11) **EP 3 659 783 A1**
(43) Date of publication of application: **03.06.2020**
(21) Application number: 18208794.0
(22) Date of filing: 28.11.2018
(51) Int. Cl.: B29C 64/129, B29C 64/124, B29C 64/264

(54) **METHOD AND DEVICE FOR ADDITIVE MANUFACTURING**

(71) Applicant: Bondtech AB, 331 53 Värnamo (SE)
(72) Inventor: de Campos Santiago, Nuno Paulo, 30177 Hannover (DE); Bondéus, Martin, 331 55 Värnamo (SE)
(74) Representative: AWA Sweden AB

(57) **Abstract**

The present invention relates to a method and an arrangement for fabricating plastic parts from photo curable resin using additive manufacturing technology. The method comprises the steps of: exposing (101) a portion of a curing interface (26) of a photo curable resin (25) to light (15) from a structured light source (10) to cure the photo curable resin (25) at the curing interface (26); moving (102) the cured resin (25b) out of the curing interface (26), introducing (103) uncured resin (25a) into the curing interface (26), rotating (104) the structured light source (10) relative the curing interface (26) to expose another portion of the curing interface (26) to light from the structured light source, continuously carrying out (105) steps (101) to (104) such that the photo curable resin (25) is cured as a single continuous layer throughout the additive manufacturing process.

## Description

### Technical Field

The present invention relates to a method and an arrangement for fabricating plastic parts from photo curable resin using additive manufacturing technology.

### Background

In additive manufacturing, resin is continuously solidified through polymerization to build three-dimensional objects. One type of additive manufacturing technology involves using a light source to continuously cure photo curable resin into solid objects. Two types of additive manufacturing technologies using photo curable resin are the following: Laser Curing, usually named SLA or stereolithography, that uses UV light lasers to cure the photo curable resin; and Structured Light Curing, which uses projection of UV light or visible light through masking or reflecting arrays to cure the photo curable resin. Further, in additive manufacturing, the photo curable resin is conventionally cured Layer-by-Layer, irrespective of which technology, Laser Curing or Structured Light Curing, is being used. The inventors of the present inventive concept have realized that there are a number of drawbacks with current additive manufacturing methods, and thus there is a need for an improved additive manufacturing technology which alleviates these drawbacks.

### Summary

The inventors of the present invention have realized a plurality of downsides with current additive manufacturing technologies, in particular Laser Curing, Structured Light Curing and Layer-by-Layer fabrication, and that there is a need for an improved additive manufacturing technology using photo curable resin.

There are at least three downsides to Laser Curing: poor resolution; slow build speed; and a scale up limitation due to an increasing ovalization of the focal point of the laser used. The inventors have realized that the first and the second downsides are inversely related. If a laser used to cure the photo curable resin is configured with a larger focal point-for instance having a diameter above 150 micrometers-the minimum build size of features becomes larger, thereby resulting in thicker walls, less detailed features and more blunt corners during the build process-the resolution is reduced. However, by increasing the size of the focal point, a projected laser spot may cover more area, such that the build speed can be effectively increased. If the laser used to cure the photo curable resin is configured with a smaller focal point-for instance between 80 and 100 micrometers-the minimum build size of feature becomes smaller, thereby resulting in more detailed features, thinner walls, and sharper corners during the build process. However, the build speed decreases because the laser spot must travel more to cover the same area. Still, in neither case is a projected laser spot capable of making sharp corners with less thickness than the diameter of the laser spot, and a full scan of the entire surface of each layer using linear and sequential tracing, which is relatively slow in comparison to Structured Light Curing which can cure large surfaces simultaneously.

The third downside concerns the following: since laser beams are tubular in shape, and are conventionally projected from the center of the build area, there is a major variation in the spot shape when projected further away from the center of the build area. When manufacturing bigger parts, the laser may need to tilt relative the build area. A greater tilting angle will consequently result in a greater laser spot ovalization. The growing challenge to cure using bigger tilting angles brings increasing tolerances to make bigger parts, and the variation of the achievable detail in different areas of the build. To counteract this effect, the machines using this technology may grow out of proportion in relation to their build volumes increase, by positioning the laser further away from the build area.

Moving on to Structured Light Curing, the inventors have identified three main downsides: limitation of the build area; limitation in flow and smoothness in oblique and curved lines; and forces required to do the peeling of each cured layer from the bottom of the resin container.

The inventors have realized that the first two are related in the following way: because this method requires filtering or reflecting of light using structured 2D binary arrays of micro elements each having an ON or OFF state, each resulting layer image is formed by pixels and its maximum size is limited by the magnification ratio of the size of each dot. Images formed by binary pixels-e.g. black or white-are prone to pixilation, thereby reducing the smoothness and fluidity of curves. To maintain a competitive ratio against Laser Curing the dot pitch is usually 50 micrometers and in most cases lower than 100 micrometers. Because there is always an inherent dot pitch to this kind of processes, the maximum build size is limited by the product of the structured array's resolution in each axis and that dot pitch. E.g., if using a HD DLP with a 1920x1080 pixels resolution, the maximum build area with a 50 micrometers dot pitch will be 96x54mm. This is, for many build projects, too small. To address this issue, one option may be to use the translation of the light projection across the horizontal axes of a build area to multiply the build area. Although this method of tiling solves the curing area limitation issue, it has itself the downside of creating in each built part a visible quadricula of seem lines created by the under or over curing of resin in the border of each tile, depending on calibration.

The third downside - actually common to both Laser and Structured Light Curing - applies to machines that cure parts bottom up - the bottom of the part is facing up and suspended from the build plate - while projecting light from below a vat, to cure the bottom surface of the resin. Resin, although being a viscous material, has an enhanced ability to conform its shape to its container. When the bottom surface of the resin is cured, it creates an extremely fitted solid surface to the vat's bottom. This fit allows for atom-to-atom distances lower than van der Waals contact distance. If the cured regions form a closed loop, like in hollow models without vents, the corresponding attraction effect, increased by factors like overcuring and contraction, creates a vacuum that needs strong forces to be overcome. That peeling force may usually disturb the geometry of the part being made when pulled below from the build plate and provoke a high failure rate of print jobs. Because the resin curing is a highly exothermic polymerization process, the resulting heat also damages the bottom of the vat, where it interfaces the resin surface, and it creates slight irregularities with time. Those irregularities cause growing suction forces and even greater menaces to the builds.

Finally, concerning Layer-by-Layer fabrication, the inventors have identified a downside concerning mechanical resistance. In Layer-by-Layer fabrication, successive layers may be undercured independently and fused to previous layers which become overcured. This irregular method of construction creates stratification in the parts. Parts are most vulnerable to bending forces and torsion forces parallel to those layers. Further, the mechanical resistance of the parts does not depend on geometry but on manufacturing strategy - part positioning and orientation - because the same model will be made stronger or weaker, depending on the amount of layer surface interface.

In light of the downsides to using Laser Curing, Structured Light Curing, and Layer-by-Layer fabrication specified above, the inventors have realized that there is a need for an improved additive manufacturing technology which alleviates these downsides. An object of the present disclosure is therefore to provide such an improved solution that alleviate the downsides mentioned above. The improved solution may also provide a plurality of advantages which will become apparent in light of the description.

The invention is defined by the appended independent claims, with embodiments being set forth in the appended dependent claims, in the following description and in the drawings.

According to a first aspect of the invention, a method for additive manufacturing of three-dimensional objects using photo curable resin is provided. The method comprises a step of exposing a portion of a curing interface of a photo curable resin to light from a structured light source to cure photo curable resin at the curing interface. The method may further comprise a step of moving the cured resin out of the curing interface. The method may comprise a step of introducing uncured resin into the curing interface. Further, the method may comprise a step of rotating the structured light source relative the curing interface to expose another portion of the curing interface to light from the structured light source. The method comprises continuously carrying out the previously mentioned steps such that the photo curable resin may be cured as a single continuous layer throughout the additive manufacturing process.

By curing interface, it is meant the surface of the photo curable resin which may be exposed to light from the structured light source. The curing interface may extend along a first surface of the photo curable resin being provided. The curing interface may also extend generally along a portion of a first surface of the photo curable resin, wherein the size of the portion is related to the range of motion of the structured light source. The curing interface may be planar. The curing interface may have a depth associated with it, thereby being a volume. The depth of the curing interface may be related to the penetration range of the light being used to cure the photo curable resin. The depth of the curing interface may be related to the light penetration depth of the photo curable resin being cured. Generally, a three-dimensional object to be built may be deconstructed into consecutive layers of voxels. However, with the present inventive concept, the three-dimensional object to be built may be deconstructed into a single continuous layer of voxels.

Further, by structured light source, it is meant a light source comprising a group of light emitting and/or reflecting units which may be individually turned ON or OFF so that a light pattern of choice may be projected onto the curing interface. The group of light emitting and/or reflecting units may comprise a set of uniform light emitting and/or reflecting units. The structured light source may comprise DLP mirror arrays. The structured light source may comprise LCD mask arrays. The structured light source may be any other kind of suitable structured light source.

As is stated above, the method comprises a step of exposing a portion of curing interface of a photo curable resin to light from a structured light source for the purpose of curing photo curable resin at the curing interface. The structured light source may project a pattern of pixel lights, i.e. a pixel pattern, to the portion of the curing interface. The pixel pattern may change over time throughout the additive manufacturing process. The size of the light-exposed curing interface portion may be relatively small as compared to the whole curing interface. For example, the size of the light-exposed curing interface portion may be 30%, 20%, 10%, 5% or less than that of the whole curing interface. Alternatively, the light-exposed curing interface portion may be relatively large as compared to the whole curing interface. For example, the size of the light-exposed curing interface portion may be 40%, 50%, 60%, 70%, 80% or more of the whole curing interface. The light from the structured light source may be in the ultraviolet, visible or infrared region of the electromagnetic spectrum.

Further, as stated above, the method may comprise a step of moving the cured resin out of the curing interface. Generally, the photo curable resin is cured onto a build platform. By moving the build platform at least in a direction vertical to the curing interface, the cured resin may thus be consequently pulled out of the curing interface, thereby reducing the cured resin from being cured further.

Further, as stated above, the method may comprise a step of introducing uncured resin into the curing interface. For example, the photo curable resin may be contained in a vat. In such a case, the build platform is configured to move relative the vat. When moving the cured resin out of the curing interface, uncured resin will take the cured resin's place.

Further, as stated above, the method may comprise a step of rotating the structured light source relative the curing interface to expose another portion of the curing interface to light from the structured light source. The structured light source may rotate about a predetermined rotational axis. Thus, when rotating the structured light source, the portion of the curing interface being exposed to light is changed.

Finally, as stated above, the method may comprise a step of continuously carrying out any of the previously mentioned method steps such that the photo curable resin is cured as a single continuous layer throughout the additive manufacturing process. The steps of the method may be carried out in a simultaneous manner. The steps of the method may be carried out in a continuous manner. Consequently, the photo curable resin may be cured as a single, helical layer.

An advantage of the above-mentioned method is the ability of customizing the light exposure of each and every voxel of resin. Each individual light emitting/reflecting unit may be controlled to be ON or OFF, thereby making it possible to control the exposure time of each resin voxel. This may allow for building uniform and homogeneous build parts. Since the structured light source rotates continuously throughout the additive manufacturing process, the exposed portion sweeps continuously along the curing interface. Combined with continuously removing cured resin and introducing uncured resin into the curing interface, the three-dimensional objects under construction is formed in a single continuous layer, thereby improving mechanical resistance as compared to Layer-by-Layer fabrication.

Another advantage is a reduced pixilation. In static structured light source arrangements, manufactured three-dimensional objects are built using static clusters of binary pixels, either in an ON-state or an OFF-state, the cured regions are formed in exposed voxels and all voxels are cured with the same exposure time. Hence, curved lines/surfaces will be constituted of voxels, i.e. parts become pixelated. Three-dimensional objects built in accordance with the present inventive concept will have a reduced pixilation. The reason for this is that the projected pixels are not static, as they have a rotational component. Because this movement is steady, the time each projected pixel is above each resin voxel is only dependent on the distance from that projected pixel to the center of rotation. The bigger the distance, the bigger the angular speed, and consequently the exposure time is reduced.

According to one further embodiment, the method may comprise a step of continuously rotating the structured light source about a rotational axis intersecting the center point of the curing interface.

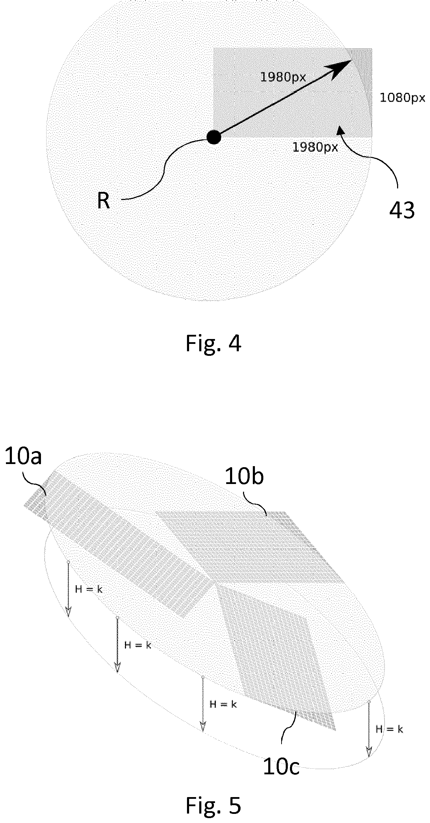

According to one further embodiment, the method may comprise a step of rotating the structured light source about a point offset from the center of the structured light source. By configuring the structured light source as such, the structured light source may allow for exposure of a larger curing interface for any given structured light source. The structured light source may be configured to rotate about an edge or a corner of the structured light source around the rotational axis. This may further increase the size of the build area. The radiation area may be increased five-fold relative to a non-rotating structured light source, as is explained below in relation to figure 4.

According to one further embodiment, the method may comprise a step of rotating a plurality of independent structured light sources, each of which configured to project pixels of light against the curing interface. By having a plurality of independent structured light sources, it allows for an additive manufacturing process where three-dimensional objects are build using multi-helical layers. For instance, two independent structured light sources may be used. For instance, three independent structured light sources may be used. More than three independent structured light sources may be used. The plurality of independent structured light sources may be configured to rotate symmetrically around the rotational axis. If two independent structured light sources are used, they may be offset about 180 degrees from one another. If three independent structured light sources are used, the may be offset about 120 degrees from one another. The group of independent structured light sources may be configured to rotate along the same rotational plane. By having a plurality of independent structured light sources, the build speed may effectively be increased.

According to one embodiment, the method may comprise a step of filtering the light from the structured light source using a masking array group or a group of arrays of micro mirrors. This may allow increased control of the pixel pattern projected onto the curing interface.

According to one embodiment, the method may comprise a step of emitting the light from the structured light source in a pattern that is dependent on the distance from the center of rotation of the structured light source. In one embodiment, the light emitted pattern is adapted to compensate for the time each pixel is above each resin voxel. This may comprise increasing the width of the pattern with the radial distance from the pixels in the pattern to the center of rotation. Hereby, the angular speed, and consequently the exposure time from each pixel, may be compensated for by means of altering the pattern.

According to one further embodiment, the method may comprise a step of containing the photo curable resin in a vat; and curing the photo curable resin to a build platform configured to be moveable relative the structured light source.

According to one further embodiment, the method may comprise a step of moving the build platform such that a distance between the structured light source and the curing interface is substantially constant. By having the distance between the structured light source, or a group of independent light sources, to the curing interface substantially kept constant, three-dimensional objects are built with substantially the same tolerance throughout the object.

According to one further embodiment, the method may comprise a step of projecting pixels of light with a preset scaling factor against the curing interface. The preset scaling factor may be adjusted so that the zoom of a lens is adjusted to a preferred level. The preset scaling factor may be related to the distance between the photo curable resin and/or the zoom of the lens. This may further improve the build quality of the manufactured parts being built. By setting the scaling factor appropriately, the build region may effectively be increased.

According to one further embodiment, the method may comprise a step of moving the build platform at a rate that is equal to or less than the photo curable resin's index of penetration for each full cycle of rotation of the structured light source. This allows each part of a three-dimensional object to be as uniform and homogeneous as possible. The rate may be 50 - 100 % of the penetration depth for a full cycle rotation, preferably 70 - 100 %, more preferably 90 - 100 % or about 95%.

According to one further embodiment, the method may comprise a step of controlling the polymerization process by using a control file generated based on data from at least an animated sequence of images. The control file may specify additive manufacturing parameters such as exposure time of each resin voxel, the speed of rotation of the structured light source or the group of structured light sources, the moving speed of the build platform etc.

According to one further embodiment, the method may comprise a step of curing the photo curable resin with electromagnetic radiation, in particular any of X-Ray, UV, visible or infrared light. Each type of electromagnetic radiation may be suitable for curing a particular type of photo curable resin. Hence, a greater range of photo curable resin may be used during the additive manufacturing method.

According to a second aspect of the invention, a computer program for executing the method according to any previous embodiments is provided. The computer program may be configured to execute the method such that three-dimensional objects being built are as close to their CAD counterparts. Further, the rotation of the structured light source/group of structured light sources and the moving of the build platform may be synchronized. This allows for improved build quality. Further, discrepancies between the expected object and the achieved object may be avoided. The program may incorporate sensory data representing information about the object presently being manufactured. In the event that a discrepancy is detected, the program may take immediate actions to remedy the discrepancy. The program may be configured to stop the additive manufacturing process entirely if an irreconcilable error is detected. Hence, material waste is reduced.

According to a third aspect of the invention, an arrangement for building three-dimensional objects using photo curable resin is provided. The arrangement may comprise a vat configured to hold a photo curable resin. The arrangement may comprise a build platform configured to be moveable relative the vat along a vertical axis. The arrangement may comprise a structured light source configured to project pixels of light against a curing interface of the photo curable resin to cure photo curable resin onto the build platform. Further, the structured light source may be configured to rotate relative the curing interface about a rotational axis intersecting the curing interface. Further, the build platform may be configured to continuously move vertically during the polymerization process. The build platform may be configured to continuously move vertically during the polymerization process such that a distance between the curing interface and the structured light source is substantially constant.

According to one further embodiment, the structured light source of the arrangement may be configured to rotate about a point offset from the center of the structured light source. Hereby, the structured light source may allow for exposure of a larger curing interface for any given structured light source. The structured light source may be configured to rotate about an edge or a corner of the structured light source around the rotational axis. This may further increase the size of the build area.

According to one embodiment, the arrangement may comprise a plurality of independent structured light sources. As discussed above in relation to the method, having a plurality of independent structured light sources, allows the build speed to be effectively increased.

Finally, it is to be understood that the arrangement may comprise any features which has been described in relation to the method according to any of the embodiments and variations.

### Brief Description of the Drawings

The invention will in the following be described in more detail with reference to the enclosed drawings, wherein:
Fig. 1a shows a schematic view of an arrangement according to one embodiment of the invention;
Fig. 1b shows a schematic view of an arrangement according to one embodiment of the invention;
Fig. 2a shows a schematic view of a polymerized sample from conventional layer-by-layer technology;
Fig. 2b shows a schematic view of a polymerized sample from the present invention according to one embodiment of the invention;
Fig. 2c shows a schematic view of the working principle according to one embodiment of the invention;
Fig. 3a shows a schematic view of a polymerized sample from conventional layer-by-layer technology;
Fig. 3b shows a schematic view of a polymerized sample from the present invention according to one embodiment of the invention;
Fig. 4 shows a schematic view of the effective radiation area according to one embodiment of the invention;
Fig. 5 shows a schematic view according to one embodiment of the invention;
Fig. 6a shows a flow chart according to one embodiment of the invention; and
Fig. 6b shows a flow chart according to one embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

In the drawings and specification, there have been disclosed preferred embodiments and examples of the invention and, although specific terms are employed, they are used in a generic and descriptive sense only and not for the purpose of limitation, the scope of the invention being set forth in the following claims.

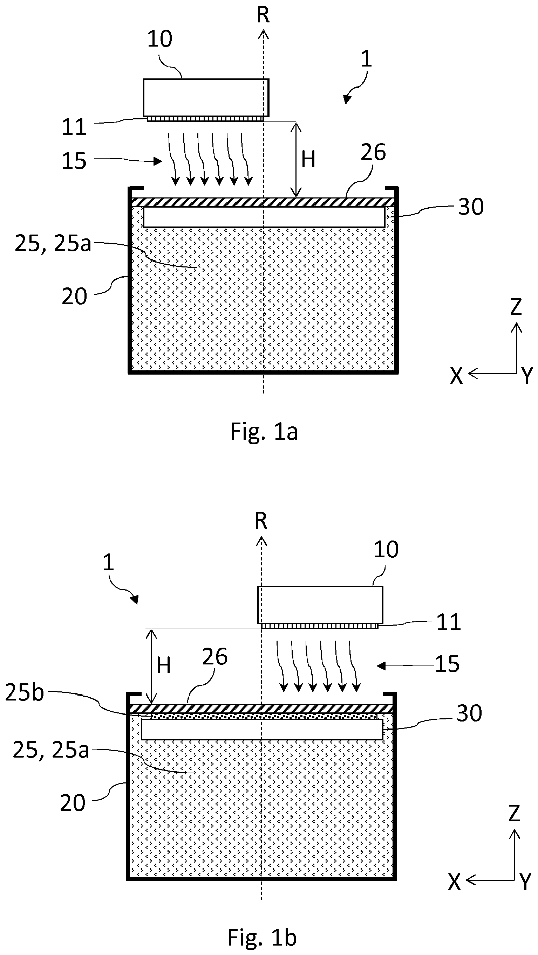

Fig. 1a-1b shows schematic views of an arrangement 1 according to one embodiment of the invention. The arrangement 1 comprises a structured light source 10, a vat 20 and a moveable build platform 30. The structured light source 10 is rotatably arranged to rotate about a rotational axis R relative the build platform 30. The build platform 30 is moveably arranged relative the structured light source 10. The build platform 30 is configured to move vertically relative the structured light source 10, along Z-axis. Further, the build platform 30 is configured to move vertically in the vat 20. The vat is configured to contain photo curable resin 25, in particular uncured resin 25a. The build platform 30 may be submerged in the photo curable resin 25. The structured light source 10 may comprise a group of uniform light emitting and/or masking and/or reflecting units 11. The structured light source 10 is configured to project light 15 onto a curing interface 26 of the photo curable resin 25. When projecting light 15 to cure photo curable resin 25, the structured light source 10 rotates about the rotational axis R, as illustrated by Figs. 1a-1b. In Fig. 1b, the structured light source 10 has rotated about 180 degrees relative its previous position as illustrated in Fig. 1a. During this half-revolution, the structured light source 10 has projected light onto the photo curable resin 25 to cure it. Some of the photo curable resin 25 at the curing interface is polymerized, as shown in Fig. 1b. The cured resin 25b is cured onto the build platform 30. Since the build platform 30 is continuously moving in a downward direction, the cured resin is continuously removed from the curing interface. Uncured resin 25a is introduced into the curing interface as the cured resin 25b is removed. Throughout the additive manufacturing process, the height H between the structured light source 10 and the curing interface 26 is substantially kept constant k, i.e. H = k.

Alternatively, the structured light source 10 is arranged below the vat 20, and configured to cure the photo curable resin 25 from below. In such a case, the build platform 30 is configured to move vertically upwards relative the structured light source 10, and the cured resin 25b is attached to the bottom side of the build platform 30. The curing interface 26 is consequently positioned at the bottom of the vat. Naturally, the height H between the structured light source 10 and the curing interface 26 may be kept substantially constant k, i.e. H = k, throughout the additive manufacturing process. The principle remains the same, since cured resin is removed from the curing interface and uncured resin is introduced into it. Irrespective of which type of arrangement, three-dimensional objects may be built as a single helicoidal layer.

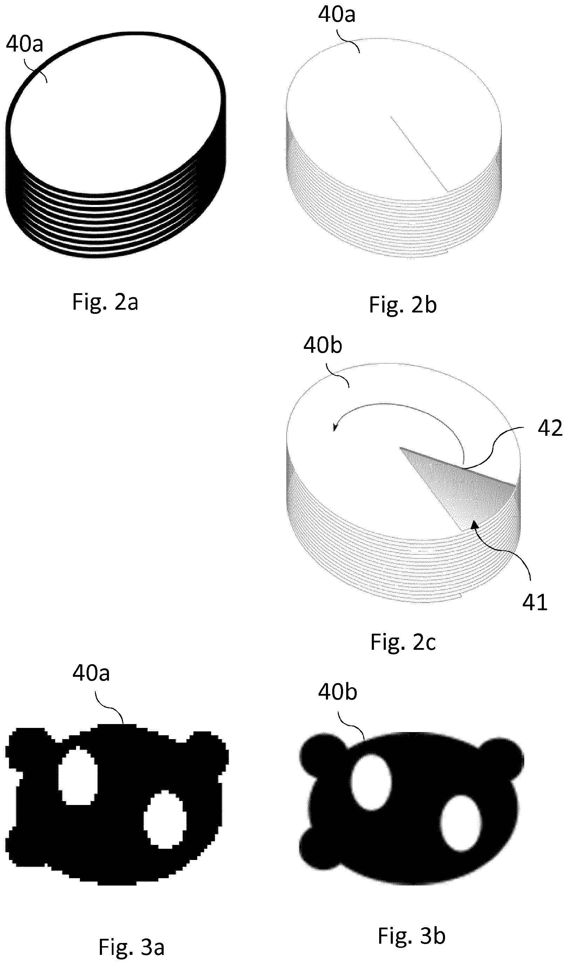

Figs. 2a - 2c show how three-dimensional objects are built from bottom to top. In Fig. 2a the object 40a is built in accordance with conventional Layer-by-Layer fabrication. In Fig. 2b - 2c the object 40b is built in accordance with the present inventive concept. Three-dimensional objects manufactured using conventional Layer-by-Layer fabrication comprise distinct layers. Such objects are prone to break along the interface between successive layers. The issue is mechanical resistance. However, objects 40b built in accordance with the present inventive concept, as shown in Fig. 2b, will be provided with improved mechanical resistance since the object is manufactured as a single helicoidal layer. In accordance with the present inventive concept, only a portion of the curing interface 26 is exposed to light at any given moment in time. Over time, the structured light source rotates about the rotational axis R, thereby the portion of the curing interface being exposed revolves around the rotational axis as well, as indicated in Fig. 2c.

The group of uniform light emitting/reflecting units may together form a wedge-shaped group. This may reduce material cost of the structured light source. Alternatively, the group of uniform light emitting/reflecting units may together for a rectangular group, wherein some light units are OFF so as to form a wedge-shape constituted by light units being in an ON-state. Such a structured light source may be more easily produced due to streamlined production lines already available today. Irrespective of which case, the projected pixel pattern may consequently also have a wedge-like shape 41 as shown in Fig. 2c. The structured light source may also project a narrow line 42 of pixels, as indicated by the thick line in Fig. 2c.

Figs. 3a - 3b illustrate a further difference between conventional additive manufacturing methods and the additive manufacturing method of the present inventive concept. Conventional structured light sources are static relative the build platform. The pixels of such a conventional structured light source together forms a grid-like structure, and as a consequence, the projected pixel-pattern will be characterized by the same grid size, along with a scaling factor due to the distance from the structured light source to the interface region. Each individual light unit may be turned ON or OFF so that certain projected pixel patterns are achieved. However, three-dimensional objects 40a manufactured using conventional structured light sources suffer from pixilation, as shown in Fig. 3a, in which a sample object is illustrated. This pixilation is overcome by the present inventive concept, since each projected pixel is accompanied with a rotational movement. Thereby, smooth curves and surfaces may be achieved for such objects 40b.

Fig. 4 is a schematic view of the effective radiation area 43 of the present invention. The structured light source 10 is configured to rotate about the rotational axis R intersecting the center of the build area. Assuming a structured light source provided with 1980 by 1080 light emitting/reflecting units, the effective radiation area then becomes the area of a circle with the radius being at least the length of 1980 pixels. Hence, the effective radiation area becomes pi times 1980 pixels squared which equals to about 11,5 million pixels, which is about 5 times the size of 1980 by 1080 (about 2 million pixels).

Fig. 5 is a schematic view of a plurality of independent structured light sources 10a, 10b, 10c. The plurality of independent structured light sources is symmetrically arranged to rotate relative the build platform. They are mutually arranged so that a corner of each independent light source joins about a point coinciding with the rotational axis R. Hence, as the group of independent structured light sources rotates about the rotational axis R, they may each be capable of curing the same voxels of the photo curable resin. The radiation area during a whole revolution will be shaped as a disc. The arrangement may comprise means for tilting the group of structured light sources, thereby extending the radiation area along one axis so that it is ovalized. Moreover, the height H between the curing interface 26 and the structured light source 10 or the plurality of independent structured light sources 10a, 10b, 10c is constant k, i.e. H = k, as illustrated in Fig. 5.

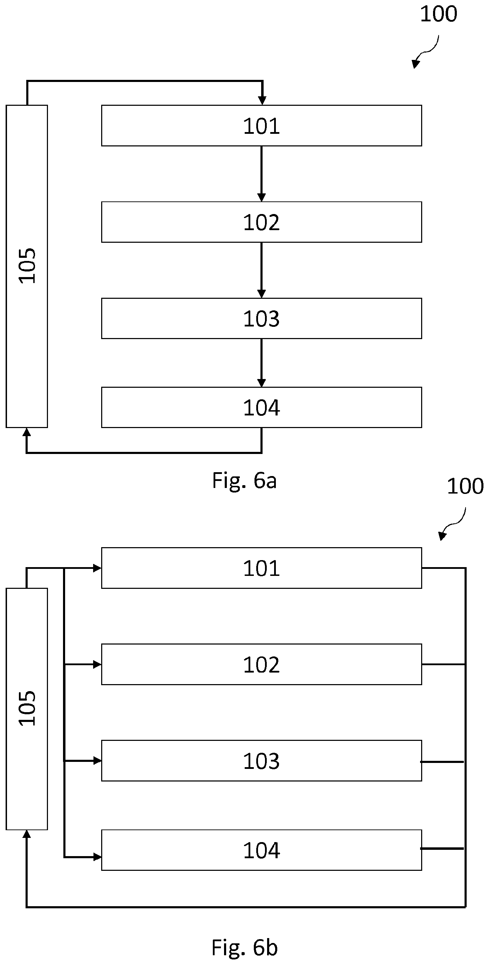

Fig. 6a and 6b are flow charts of the method 100 for additive manufacturing of three-dimensional objects using photo curable resin that is cured as a single helicoidal layer. The method comprises the steps of comprising the steps of: exposing 101 a portion of a curing interface 26 of a photo curable resin 25 to light 15 from a structured light source 10 to cure the photo curable resin 25 at the curing interface 26; moving 102 the cured resin 25b out of the curing interface 26, introducing 103 uncured resin 25a into the curing interface 26, rotating 104 the structured light source 10 relative the curing interface 26 to expose another portion of the curing interface 26 to light from the structured light source, continuously carrying out 105 steps 101 to 104 such that the photo curable resin 25 is cured as a single continuous layer throughout the additive manufacturing process. Fig. 6a should not be interpreted as that the steps must be carried out serially. In fact, the steps are preferably carried out as parallel steps, where there is a continuous execution of each step so as to create a single continuous layer, as mentioned above and illustrated in Fig. 6b.

Although exemplary embodiments of the present invention have been shown and described, it will be apparent to the person skilled in the art that a number of changes and modifications, or alterations of the invention as described herein may be made. Moreover, the different embodiments described above may be combined in different ways without departing from the scope of the inventive concept. Thus, it is to be understood that the above description of the invention and the accompanying drawing is to be regarded as a non-limiting example thereof and that the scope of the invention is defined in the appended patent claims.

## Claims

1. A method for additive manufacturing of three-dimensional objects using photo curable resin, comprising the steps of:
- exposing (101) a portion of a curing interface (26) of a photo curable resin (25) to light (15) from a structured light source (10) to cure the photo curable resin (25) at the curing interface (26);
- moving (102) the cured resin (25b) out of the curing interface (26),
- introducing (103) uncured resin (25a) into the curing interface (26),
- rotating (104) the structured light source (10) relative the curing interface (26) to expose another portion of the curing interface (26) to light from the structured light source,
- continuously carrying out (105) steps (101) to (104) such that the photo curable resin (25) is cured as a single continuous layer throughout the additive manufacturing process.

2. The method according to claim 1, comprising the step of filtering the light (15) from the structured light source (10) using a masking array or a group of masking arrays or an array of micro mirrors or a group of arrays of micro mirrors

3. The method according to any preceding claims, comprising the step of continuously rotating the structured light source (10) about a rotational axis (R) intersecting the center point of the curing interface (26).

4. The method according to any preceding claims, comprising the step of rotating the structured light source (10) about a point offset from the center of the structured light source (10).

5. The method according to any preceding claims, comprising the step of rotating a plurality of independent structured light sources (10a, 10b, 10c), each of which configured to project pixels of light against the curing interface (26).

6. The method according to any preceding claims, comprising the step of projecting pixels of light with a preset scaling factor against the curing interface (26).

7. The method according to any preceding claims, comprising the step of containing the photo curable resin (25) in a vat (20); and curing the photo curable resin (25) to a build platform (30) configured to be moveable relative the structured light source (10).

8. The method according to claim 7, comprising the step of moving the build platform (30) such that a distance (d) between the structured light source (10) and the curing interface (26) is substantially constant.

9. The method according to any preceding claims, comprising the step of moving the build platform (30) at a rate that is equal to or less than the photo curable resin's index of penetration for each full cycle of rotation of the structured light source (10).

10. The method according to any preceding claims, comprising the step of controlling the polymerization process by using a control file generated based on data from at least an animated sequence of images.

11. The method according to any preceding claims, the method comprising curing the photo curable resin (25) with electromagnetic radiation, in particular any of X-Ray, UV, visible or infrared light.

12. A computer program for executing the method according to any of claims 1 - 11.

13. An arrangement (1) for building three-dimensional objects using photo curable resin, the arrangement (1) comprising:
- a vat (20) configured to hold a photo curable resin (25);
- a build platform (30) configured to be moveable relative the vat (20) along a vertical axis (Z), and
- a structured light source (10) configured to project pixels of light against a curing interface (26) of the photo curable resin (25) to cure photo curable resin (25) onto the build platform (30),
wherein the structured light source (10) is configured to rotate relative the curing interface (26) about an axis (R) intersecting the curing interface, wherein the build platform (30) is configured to continuously move vertically during the polymerization process such that a distance (d) between the curing interface (26) and the structured light source (10) is substantially constant.

14. Arrangement according to claim 13, wherein the structured light source (10) is configured to rotate about a point offset from the center of the structured light source (10).

15. Arrangement according to any of claims 12 - 13, comprising a plurality of independent structured light sources (10a, 10b, 10c).
